# EUROPÄISCHE PATENTSCHRIFT

(11) **EP 1 720 718 B1**
(45) Veröffentlichungstag und Bekanntmachung des Hinweises auf die Patenterteilung: **19.12.2007**
(21) Anmeldenummer: 05701495.3
(22) Anmeldetag: 12.01.2005
(51) Int. Cl.: B60C 5/16, B60C 15/028

(54) **DICHTRING FÜR EIN FAHRZEUGRAD**
SEALING RING FOR A VEHICLE WHEEL
BAGUE D'ETANCHEITE POUR ROUE DE VEHICULE

(30) Priorität: 26.02.2004 DE 102004009379
(43) Veröffentlichungstag der Anmeldung: 15.11.2006
(73) Patentinhaber: Continental Aktiengesellschaft, 30165 Hannover (DE)
(72) Erfinder: KIDNEY, Darren, 30900 Wedemark (DE)
(74) Vertreter: Finger, Karsten
(86) Internationale Anmeldenummer: PCT/EP2005/050107
(87) Internationale Veröffentlichungsnummer: WO 2005/082642

(56) Entgegenhaltungen:
- DE-B- 1 021 738
- FR-A- 707 078
- GB-A- 787 784
- GB-A- 2 044 189
- LU-A- 33 419
- US-A- 5 495 881

## Beschreibung

Die Erfindung betrifft einen Dichtring für ein Fahrzeugrad mit einem schlauchlosen Luftreifen mit zwei an dessen radial innerer Seite ausgebildeten Reifenwülsten, wobei der schlauchlose Luftreifen mittels seiner Reifenwülste auf der radialen Außenseite einer mehrteiligen Felge montiert ist, und mit einem den Luftreifen nach radial innen zur Felge hin abdichtenden auf der radialen Außenseite der Felge angeordneten, in Umfangsrichtung über den Umfang der Felge erstreckten und in axialer Richtung zwischen den beiden Reifenwülsten des Luftreifens erstreckten Dichtring.

Aus der DE-AS 1021738 ist ein Fahrzeugrad mit einem schlauchlosen Luftreifen mit zwei an dessen radial innerer Seite ausgebildeten Reifenwülsten, wobei der schlauchlose Luftreifen mittels seiner Reifenwülste auf der radialen Außenseite einer mehrteiligen Felge montiert ist, bekannt, bei dem der Luftreifen nach radial innen zur Felge hin mit einem in Umfangsrichtung über den Umfang der Felge erstreckten und in axialer Richtung zwischen den beiden Reifenwülsten des Luftreifens erstreckten Einlageband zur radialen Außenseite der Felge hin abgedichtet wird. Hierzu wird ein im axialen Querschnitt nach radial außen gewölbtes Einlageband bei der Montage radial außerhalb der Felge zwischen die beiden Reifenwülste eingelegt, so dass es aufgrund des Überdrucks im Reifen im Betriebszustand mit seinen axialen Stirnseiten unter Öffnung der Wölbung gegen die Reifenwülste presst und zwischen den Reifenwülsten dichtend verspannt. Die Anlage ist radial und über den Umfang des Reifens hinweg weitgehend undefiniert und hängt vom zufälligen Kontakt zwischen Einlageband und den einzelnen Reifenwülsten beim Einlegen und Befestigen der Reifenwülste auf der Felge ab. Bei jedem betriebsbedingten Druckluftverlust und erneutem Befüllen des Fahrzeugluftreifens mit Druckluft besteht die Gefahr einer zufälligen undefinierten Positionsveränderung zwischen Einlageband, Felge und Fahrzeugluftreifen. Zur Erzielung einer sicheren Dichtung sowie zur Vermeidung unerwünschter Unwuchten ist es erforderlich, das Einlageband möglichst definiert zur Felge und zum Fahrzeugluftreifen dauerhaft zu positionieren. Eine derart definierte dauerhafte Montage ist bei diesem nach radial außen gewölbten Einlagebandes, das lediglich zwischen den Wülsten ohne Felgenkontakt eingelegt und eingespannt wird - wenn überhaupt - nur mit großem zusätzlichem Aufwand möglich.

Aus der DE-AS 1053334 ist es bekannt, ein im wesentliches flaches Einlageband, das an beiden axialen Seiten mit zu Lappen verjüngtem Querschnitt ausgebildet ist, bei einem Fahrzeugrad mit einem schlauchlosen Luftreifen mit zwei an dessen radial innerer Seite ausgebildeten Reifenwülsten, wobei der schlauchlose Luftreifen mittels seiner Reifenwülste auf der radialen Außenseite einer mehrteiligen Felge montiert ist, bei der Montage radial außerhalb der Reifenwülste zwischen den Reifenseitenwänden im Fahrzeugluftreifen aufzubauen. Beim Befüllen des montierten Fahrzeugluftreifens mit Druckluft wird das Einlageband sufgrund des Innendrucks nach radial innen gepresst, so dass es sich unter vollständigem axialem Kontakt zu den Reifenwülsten radial zwischen die Reifenwülste presst und vollständig an die Reifenwülste und Felge und mit seinen Lappen an die unteren Reifenseitenwände anschmiegt. Zur Erzielung der vollständigen Anschmiegung ist das flache Einlageband den Wülsten entsprechend profiliert, so dass beim radialen Einpressen der Anlagekontakt vollständig erzielt wird. Das profilierte Einlageband mit Lappen muss in seiner Kontur ein sehr genaues Negativ der Wulst- und Felgenkontur entsprechen und die Einlage bei der Montage muss ebenfalls sehr exakt der Sollposition entsprechen, damit die Negativkontur des Einlagebandes sich genau an die Positivkontur von Wülsten und Felge anschmiegen kann. Dies bedeutet, dass sowohl Herstellungs- als auch Montageaufwand zur Sicherstellung hinreichender Dichtigkeit sehr groß werden.

Aus der FR 707078 A ist es bekannt, zwischen die beiden Reifenwülste ein dünnes flaches flexibles Wulstband einzusetzen. Auch aus der LU 33419 A ist es bekannt ein Wulstband einzusetzen, wobei dieses Wulstband an seinen axialen Außenseiten mit nach radial außen gerichteten dicken konvexen Wülsten versehen, die mit korrespondierenden axial nach innen gerichteten Verdickungen des Reifenwulstes verzahnt sind.

Aus der DE 69401237T2 ist ein Fahrzeugrad mit einem schlauchlosen Luftreifen mit zwei an dessen radial innerer Seite ausgebildeten Reifenwülsten, mittels derer der schlauchlose Luftreifen auf der radialen Außenseite einer mehrteiligen Felge montiert ist, mit einem zwischen den Reifenwülsten montierten konzentrischen Dichtring nach radial innen zur Felge hin abzudichten. Der Dichtring ist sowohl an seiner radialen Außenseite als auch an seiner radialen Innenseite im wesentlichen zylindrisch ausgebildet und erstreckt sich im montierten Zustand des Fahrzeugrades in Umfangsrichtung über den gesamten Umfang der Felge. In axialer Richtung ist der Dichtring breiter ausgebildet als der Abstand zwischen den beiden Reifenwülsten des montierten Fahrzeugrades, so dass er im montierten Betriebszustand des Fahrzeugrades in dichtender axialer Presspassung zu den beiden Reifenwülsten steht. Zur Erzielung einer entlang der radialen Erstreckung des Dichtrings von radial innen nach radial außen veränderten Presspassung zwischen Dichtring und Reifenwülsten ist der Dichtring an seinen axialen Stirnflächen profiliert ausgebildet. Hierzu ist der Dichtring an seiner radialen Innenseite im axialen Stirnflächenbereich mit konischen Ausläufen versehen. Die axiale Presskraftkomponente wird im wesentlichen durch den axial steifen zwischen den Reifenwülsten erstreckten Materialblock des Dichtrings übertragen. Die radiale Presskraftkomponenete wird im zu einem wesentlichen Teil durch den Überdruck im Fahrzeugrad aufgebracht. Auch wenn hierdurch zwar ein für die Dichtwirkung positiver Presspassungsverlauf möglich ist, ist die Montierbarkeit dieses Dichtrings mit im wesentlichen zylindrischen Querschnitt erschwert. Der Dichtring muss zur Montage entgegen dem hohen Widerstand des steifen blockförmigen Querschnitts um seine Umfangsachse gebogen werden, damit der Dichtring in Achsrichtung überhaupt zwischen die Reifenwülste eingesetzt werden kann. Die hierfür erforderlichen hohen Kräfte, die von außen aufgewandt werden müssen, gefährden die Genauigkeit der Einpassung.

Der Erfindung liegt die Aufgabe zugrunde in einfacher Weise bei einem Fahrzeugrad mit einem schlauchlosen Luftreifen mit zwei an dessen radial innerer Seite ausgebildeten Reifenwülsten, mittels der der schlauchlose Luftreifen auf der radialen Außenseite einer mehrteiligen Felge montiert ist, und mit einem den Luftreifen nach radial innen zur Felge hin abdichtenden auf der radialen Außenseite der Felge angeordneten, in Umfangsrichtung über den Umfang der Felge erstreckten und in axialer Richtung zwischen den beiden Reifenwülsten des Luftreifens erstreckten Dichtring, eine sichere und zuverlässige Dichtung zu ermöglichen.

Die Aufgabe wird erfindungsgemäß durch Ausbildung eines Dichtrings für ein Fahrzeugrad mit einem schlauchlosen Luftreifen mit zwei an dessen radial innerer Seite ausgebildeten Reifenwülsten, mittels der der schlauchlose Luftreifen auf der radialen Außenseite einer mehrteiligen Felge montiert ist, und mit einem den Luftreifen nach radial innen zur Felge hin abdichtenden auf der radialen Außenseite der Felge angeordneten, in Umfangsrichtung über den Umfang der Felge erstreckten und in axialer Richtung zwischen den beiden Reifenwülsten des Luftreifens erstreckten Dichtring gemäß den Merkmalen von Anspruch 1 gelöst, wobei der Dichtring mit einem zentralen Ringkörper mit zylindrischer Innenfläche zum Sitz auf der Felgenaußenfläche und an beiden axialen Seiten des zentralen Ringkörpers jeweils mit einem konzentrischen flexiblen ringförmigen Schenkel ausgebildet ist, der sich in axialer Richtung vom zentralen Ringkörper nach außen hin schräg nach radial außen erstreckt, und wobei an dem vom zentralen Ringkörper wegweisenden Ende des Schenkels an der nach radial innen weisenden Oberfläche des ringförmigen Schenkels über den Umfang des ringförmigen Schenkels erstreckt ausgebildete deformierbare Dichtelemente ausgebildet sind.

Die flexiblen ringförmigen Schenkel dieses Dichtrings ermöglichen es durch einfaches flexibles Kippen der Schenkel über radial außen nach axial innen den Dichtring in seine Betriebsposition zwischen den Reifenwülsten sicher zu positionieren, in der der steife zentrale Ringkörper im Betriebszustand des Fahrzeugrades durch den Überdruck im Fahrzeugrad sicher auf der Sitzfläche an der radialen Außenseite der Felge sitzt Das rückstellende Moment der Schenkel legt die Schenkel mit deformierbaren Dichtelementen unter Ausnutzung des Hebelarms soweit an den jeweils zugeordneten Reifenwulst an, dass eine erste Dichtwirkung erzielt wird, die mit steigendem Innendruck im Fahrzeugrad bis zum Betriebsdruck durch Deformation des Schenkels über den gesamten Schenkel zuverlässig weiter verstärkt wird.

Besonders vorteilhaft ist die Ausbildung gemäß den Merkmalen des Anspruchs 2, bei der an dem vom zentralen Ringkörper wegweisenden Ende des Schenkels radial außerhalb des zentralen Ringkörpers an der nach radial innen weisenden Oberfläche des ringförmigen Schenkels über den Umfang des ringförmigen Schenkels erstreckt ausgebildete deformierbare Dichtelemente ausgebildet sind. Hierdurch sind die deformierbaren Dichtelemente radial außerhalb des steifen zentralen Ringkörpers, wodurch deren Anlegefläche an den jeweils zugehörigen Reifenwulst zur Montage zunächst sicher nach axial innen über radial außen weggekippt werden können und anschließend durch den langen Hebelarm des Schenkels unter Ausnutzung der Rückstellkraft des flexiblen Hebelarms sicher in ihre Sollposition vor Einleitung des Betriebsdruck gebracht werden können. Unerwünschte Beschädigungen der deformierbaren Dichtelemente aufgrund hoher axialer Presskräfte zwischen Reifenwulst und Dichtring während der Montage können hierdurch vermieden werden. Beim Erhöhen des Innendrucks im Fahrzeugrad werden die Schenkel weiter an den Reifenwulst gekippt und die Dichtelemente zur Erhöhung der Dichtwirkung deformiert. Durch weiteres Erhöhen des Innendrucks im Fahrzeugrad bis zum Betriebsdruck werden zusätzlich die flexiblen Schenkel gebogen, so dass sich die Schenkel mit ihrer axialen Außenseite druckabhängig an die Reifenseitenwand pressen, wodurch die Dichtwirkung weiter erhöht wird.

Bevorzugt ist die Ausbildung gemäß den Merkmalen von Anspruch 3, wobei die Dichtelemente in Umfangsrichtung ausgerichtete - insbesondere über den gesamten Umfang des Dichtrings erstreckte - Dichtlippen sind Hierdurch wird in einfacher Weise eine sehr zuverlässige Dichtwirkung über den gesamten Umfang des Fahrzeugrades ermöglicht Besonders vorteilhaft ist die Ausbildung gemäß den Merkmalen des Anspruchs 4, wobei die Dichtelemente mehrere - insbesondere drei bis sechs - in radialer Richtung verteilte in Umfangsrichtung ausgerichtete - insbesondere über den gesamten Umfang des Dichtrings erstreckte - Dichtlippen sind. Hierdurch wird ermöglicht, dass beim Durchbiegen der Schenkel aufgrund der Druckerhöhung im Fahrzeugrad weitere Dichtlippen in Dichtwirkung geraten, so dass eine druckabhängige Dichtwirkung erzielt wird.

Besonders vorteilhaft ist die Ausbildung gemäß den Merkmalen des Anspruchs 5, wobei sich die Dichtlippen im wesentlichen senkrecht zur Oberfläche des Schenkels vom Schenkel weg erstrecken. Hierdurch ergibt sich eine besonders vorteilhafte, dichtende Deformation.

Die Ausbildung gemäß den Merkmalen des Anspruch 6, wobei am zentralen Ringkörper zwischen den ringförmigen Schenkeln Mittel zur Versteifung des Ringkörpers ausgebildet sind ermöglicht eine besonders sichere Montage des Dichtrings, der aufgrund seiner hoher Grundsteifigkeit besonders sicher auf der Felge positioniert werden kann.

Bevorzugt, weil sehr einfach herszustellen, ist die Ausbildung gemäß den Merkmalen des Anspruch 7, bei der die Mittel zur Versteifung eine oder mehrere an der radialen Außenseite des Ringkörpers ausgebildete radiale Erhebungen sind.

Besonders vorteilhaft ist die Ausgestaltung gemäß den Merkmalen des Anspruchs 8, wobei wenigstens in einer radialen Erhebung ein Hohlraum ausgebildet ist. Hierdurch ist bei geringem Gewicht eine hohe Grundsteifigkeit des Dichtrings möglich.

Besonders vorteilhaft ist die Ausbildung gemäß den Merkmalen des Anspruchs 9, wobei an der radialen Außenseite des zentralen Ringkörpers zwischen den ringförmigen Schenkeln eine in Umfangsrichtung ausgerichtete - insbesondere über den gesamten Umfang des Ringkörpers erstreckte - Versteifungsrippe ausgebildet ist. Hierdurch kann in einfacher Weise ohne Rundlaufprobleme eine zuverlässige Versteifung des Dichtrings ermöglicht werden.

Eine weitere vorteilhafte Ausgestaltung beinhaltet Anspruch 10, wobei der axiale Abstand zwischen den axialen Außenseiten der beiden Schenkel in einer ersten radialen Position, die der radialen Position der radial inneren Ende der Schenkel entspricht, kleiner als der axiale Wulstabstand der Reifenwülste im montierten Betriebszustand auf der Felge in dieser ersten radialen Position ist, wobei der axiale Abstand zwischen den axialen Außenseiten der beiden Schenkel in einer zweiten radialen Position, die der radialen Position der radial äußeren Enden der Schenkel entspricht, größer als der axiale Wulstabstand der Reifenwülste im montierten Betriebszustand auf der Felge in dieser zweiten radialen Position ist und wobei der axiale Abstand zwischen den axialen Außenseiten der beiden Schenkel im Bereich der Dichtelemente größer als der axiale Wulstabstand der Reifenwülste im montierten Betriebszustand auf der Felge in der ersten radialen Position ist. Durch das axiale Spiel zwischen Dichtring und Reifenwülsten am radial inneren Ende der flexiblen Schenkel kann der Dichtring sehr zuverlässig auf der an der radialen Außenseite der Felge ausgebildeten Sitzfläche positioniert und anschließend über weiter außen liegende Bereiche der Schenkel abgedichtet werden. Dies wird besonders zuverlässig durch die Ausbildung gemäß den Merkmalen des Anspruchs 11 erreicht, wobei der axiale Abstand zwischen den axialen Außenseiten der beiden Schenkel im Bereich zumindest der radial äußeren - insbesondere aller - an den Schenkeln ausgebildeten Dichtelemente größer als der jeweilige axiale Wulstabstand der Reifenwülste im montierten Betriebszustand auf der Felge in dieser radialen Position ist. Durch eine Ausbildung gemäß den Merkmalen des Anspruchs 12, wobei die Differenz des axialen Abstands zwischen den axialen Außenseiten der beiden Schenkel minus dem axialen Wulstabstand der Reifenwülste im montierten Betriebszustand auf der Felge in der jeweils zugeordneten radialen Position in radialer Richtung von einem Dichtelement zum nächsten Dichtelement abnimmt, kann in sehr einfacher Weise eine vom Innendruck abhängige Dichtwirkung erzielt werden.

Die Erfindung wird im Folgenden anhand der in den Figuren 1 bis 19 dargestellten Ausführungsbeispiele eines Fahrzeugrades mit schlauchlosem Industriereifen mit in axialer Richtung geteilter Felge näher erläutert. Hierin zeigen:
- Fig. 1: einen die Fahrzeugradachse beinhaltenden Querschnitt durch ein Fahrzeugrad im Betriebszustand mit schlauchlosem Industriereifen und axial dreiteilig ausgebildeter Felge, mit Dichtring und mit eingebautem Ventilkörper mit Ventil,
- Fig. 2: Querschnittdarstellung des Dichtrings von Fig. 1 vor Einbau ins Fahrzeugrad in einer Schnittebene, die die Achse des Dichtrings beinhaltet,
- Fig. 3a und 3b: Schnittdarstellung des Fahrzeugrades im montierten Zustand jedoch ohne Dichtring und Schnittdarstellung des Dichtring außerhalb des Fahrzeugrads,
- Fig. 4: Überlagerte Darstellung der Fig. 3a und 3b,
- Fig. 5: Darstellung des Fahrzeugrades mit montiertem Dichtring mit 0 Bar Überdruck im Fahrzeugreifen,
- Fig. 6: Darstellung des Fahrzeugrades mit montiertem Dichtring im Betriebszustand mit 10 Bar Überdruck im Fahrzeugreifen,
- Fig. 7: Schnittdarstellung des Ventilkörpers von Fig. 1 ohne Ventil,
- Fig. 8: Darstellung des Ventilkörpers entsprechend der Ansicht III-III von Fig. 7
- Fig. 9: Darstellung des Ventilkörpers in Draufsicht gemäß Ansicht IV-IV von Fig. 7
- Fig. 10: Alternativausführung des Ventilkörpers von Fig. 7 ,
- Fig. 11: Ventilkörper von Fig. 5 in Schnittdarstellung VI-VI von Fig. 10,
- Fig. 12: Querschnitt eines Fahrzeugrades von Fig. 1 in einer die Fahrzeugradachse beinhaltetenden Querschnittsdarstellung mit alternativer Ausführung,
- Fig. 13: Perspektivische Darstellung des Ventilkörpers von Fig. 12
- Fig. 14: Darstellung des Ventilkörpers gemäß Ansicht IX-IX von Fig. 13
- Fig. 15: Ventilkörper der Figuren 12 bis 14 in alternativer Ausführung
- Fig. 16: Ansicht auf Ventilkörper und Felge gemäß Darstellung von Schnitt XI-XI von Fig. 1 zur Erläuterung der Befestigung des Ventilkörpers,
- Fig. 17: Ventilkörper in alternativer Ausbildung,
- Fig. 18a und b: Erläuterung der Montage des Ventilkörpers von Fig. 17,
- Fig. 19: Querschnittdarstellung des Dichtrings von Fig. 1 in altenativer Ausführung zur Ausbildung von Fig. 2 vor Einbau ins Fahrzeugrad in einer Schnittebene, die die Achse des Dichtrings beinhaltet.

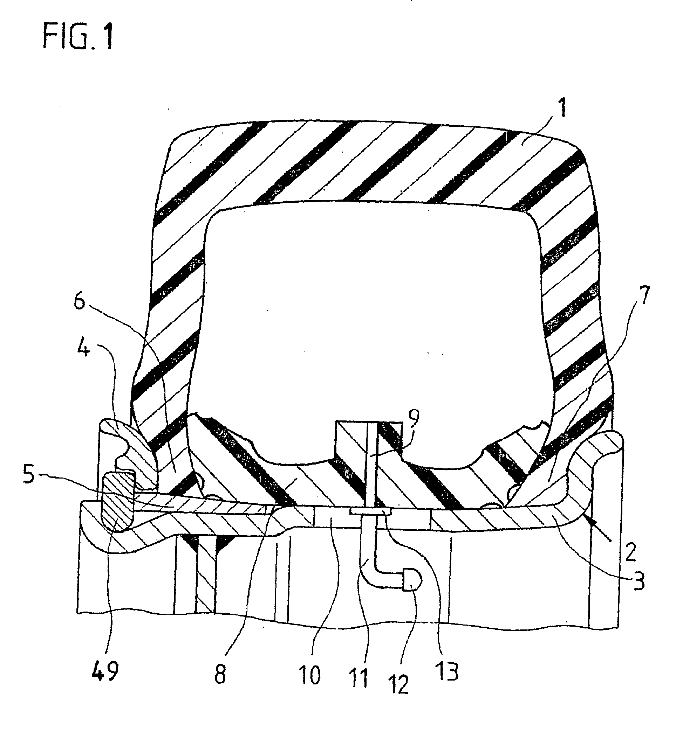

Fig. 1 zeigt die Querschnittsdarstellung eines Fahrzeugrades mit Industriereifen - wie sie beispielsweise für Gabelstapler, Schwerlasttransporter oder Flugplatzfahrzeuge zum Einsatz kommen - mit einem schlauchlosen Luftreifen 1 bekannter Art, der sich in axialer Richtung ausgehend von einem ersten Reifenwulst 6 über eine in der Darstellung linke Seitenwand, einen Laufflächenbereich, eine in der Darstellung rechte Seitenwand bis zum zweiten Wulstbereich 7 erstreckt. Der Fahrzeugluftreifen ist mit seinen beiden Wülsten 6 und 7 auf einer in axialer Richtung viergeteilten Felge 2 bekannter Art befestigt. Die axial viergeteilte Felge 2 ist aus einer mit Flachbett ausgebildeten Grundfelge 3, deren in Fig. 1 dargestellte rechte axiale Seite zu einem Felgenhorn ausgebildet ist, aus einem Hornring 4, der zu dem in Fig. 1 linken Felgenhorn ausgebildet ist, mit einem in Umfangsrichtung geteilten Schrägschulterring 5 und mit einem in Umfangsrichtung geteilten Verschlussring 49 bekannter Art ausgebildet. Im montierten Zustand sitzt der Reifen 1 mit seinem Wulst 6 auf der als Sitzfläche ausgebildeten radial äußeren Oberfläche des geteilten Schrägschulterrings 5 und der Wulst 7 auf der als Sitzfläche ausgebildeten radial äußeren Oberfläche der Felge 3. Zur axialen Außenseite stützt sich der Wulst 6 am als Felgenhorn ausgebildeten Hornring 4 und der Wulst 7 am Felgenhorn der Grundfelge 3 ab. Axial zwischen den beiden Wülsten 6 und 7 und in dichtendem axialen Berührkontakt zu den Wülsten 6 und 7 ist ein Dichtring 8 ausgebildet, der sich in Umfangsrichtung über den gesamten Umfang der Felge erstreckt. Der Dichtring 8 ist einstückig ausgebildet und besteht aus dichtendem Gummimaterial oder gummiähnlichem Kunststoff. Es ist denkbar, im Gummimaterial des Dichtrings 8 verstärkende Festigkeitsträger bekannter Art einzubetten.

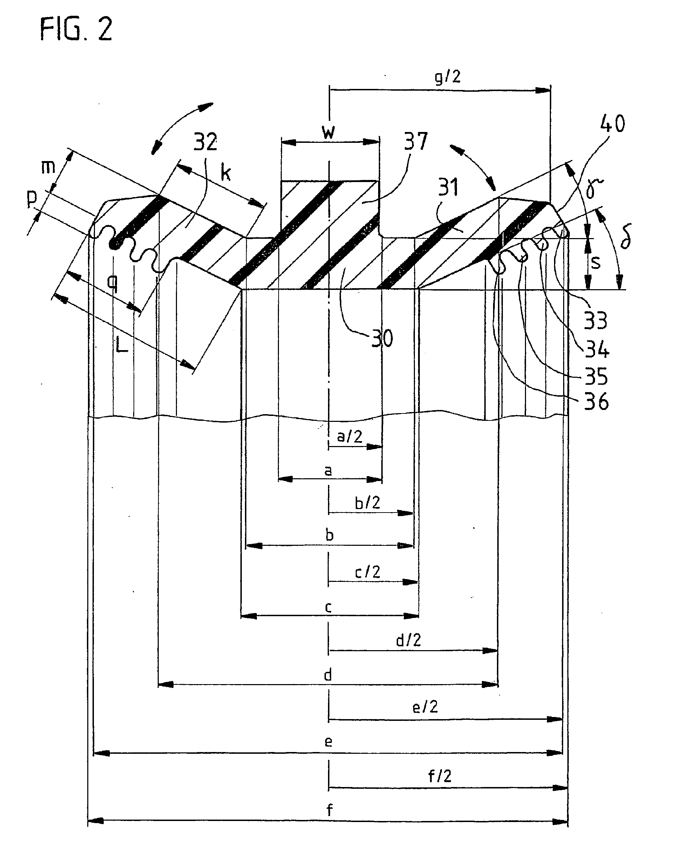

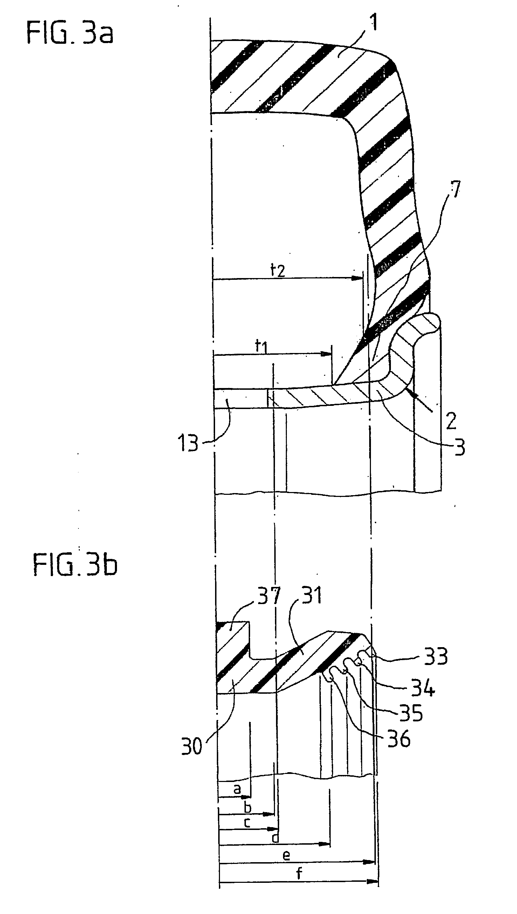

Der Dichtring 8 ist - wie in Fig. 2, die den Dichtring 8 im nicht eingebauten Zustand in das Fahrzeugrad zeigt, dargestellt ist - mit einem zentralen Ringkörper 30 mit im Wesentlichen zylindrischer radial innerer und radial äußerer Mantelfläche ausgebildet, der sich an seiner radial inneren Manttelfläche über eine axiale Breite c erstreckt. Im axialen Anschluss zu beiden axialen Seiten des zentralen Ringkörpers 30 ist der Dichtring jeweils mit einem konzentrischen ringförmigen Schenkel 31 bzw. 32 ausgebildet, der sich jeweils ausgehend vom zentralen Ringkörper 30 nach axial außen hin in radialer Richtung nach außen steigend erstreckt. Der Dichtring 8 mit zentralem Ringkörper 30 und den Schenkeln 31 und 32 ist symmetrisch zur axialen Mittelebene ausgebildet Daher ist in den Fig. 3 bis 5 lediglich die rechte Seite mit dem Schenkel 31 dargestellt und die Ausbildung im Folgenden vorwiegend bezüglich des rechten Schenkels 31 beschrieben. Die radiale Innenmantelfläche des Schenkels 31 bzw. des Schenkels 32 erstreckt sich ausgehend vom Abstand (c/2) von der axialen Mittelebene des Dichtrings 8 nach axial außen unter einem Steigungswinkel δ bis zum Abstand (e/2) von der axialen Mittelebene des Dichtrings 8. Die radial äußere Mantelfläche des Schenkels 31 bzw. 32 erstreckt sich ausgehend vom Abstand b/2 von der axialen Mittelebene des Dichtrings 8 unter Einschluss eines Steigungswinkels γ zur Axialen bis in einen Abstand d/2 von der axialen Mittelebene des Dichtrings 8. Ausgehend vom Abstand d/2 von der axialen Mittelebene des Dichtrings 8 nach axial außen ist die radial äußere Mantelfläche der Schenkel 31 bzw. 32 bis in einen Abstand g/2 von der axialen Mittelebene des Dichtrings 8 mit weitgehend achsparalleler Kontur und somit nahezu zylindrisch ausgebildet. Diesen nahezu zylindrischen Endauslauf der radial äußeren Mantelfläche der Schenkel 31 bzw. 32 schließt sich jeweils eine Stirnflläche 40 an, die sich bis zur radial inneren Mantelfläche des Schenkels 31 bzw. 32 erstreckt und nahezu senkrecht auf der radial inneren Mantelfläche des Schenkels 31 bzw. 32 steht. Die Materialdicke m des Schenkels 31 bzw. 32, die den jeweiligen senkrechten Abstand von radial innerer Mantelfläche zu radial äußerer Mantelfläche darstellt, ist kleiner oder gleichgroß gewählt wie die radiale Dicke s des nahezu zylindrischen zentraler Ringkörpers 30.

Die Abmessunge b,c,d,e,f und g sind so gewählt, dass b<c<d<g<e<f.

Die Winkel δ und γ sind jeweils zwischen 20° und 35° gewählt, wobei für den Betrag der Differenz gilt |(γ - δ)| ≤ 5°. Im gezeigten Ausführungsbeispiel sind die beiden Winkel wie folgt gewählt: γ = δ = 25°. In diesem Fall ist die Dicke m über die gesamte Erstreckungslänge k der radial äußeren Mantelfläche zwischen dem axialen Abstand b/2 und d/2 von der axialen Mittelebene des Dichtrings hinweg konstant ausgebildet.

An der radial inneren Mantelfläche der Schenkel 31 bzw. 32 sind jeweils ausgehend von der Stirnfläche 40 über eine Erstreckungslänge q konzentrisch zum Dichtring 8 in Umfangsrichtung ausgerichtete und über den gesamten Umfang des Dichtrings 8 erstreckte Dichtlippen - im dargestellten Ausführungsbeispiel von Figur 2 vier Dichtlippen 33, 34, 35 und 36 - ausgebildet. Die Dichtlippen 33,34,35 und 36 erstrecken sich jeweils senkrecht zur radial inneren Mantelfläche des jeweiligen Schenkels 31 bzw 32 ausgerichtet über eine senkrecht zur inneren Mantelfläche gemessenes Erstreckungslänge p, wobei 0,5mm≤p≤5 mm beträgt. Die Erstreckungslänge q ist so gewählt, dass q≤(L/2), wobei L das in der Schnittebene von Fig. 2 dargestellte Maß der Erstreckung der radial inneren Mantelfläche des Dichtrings 8 zwischen dem axialen Abstand c/2 und e/2 von der axialen Mittelebene des Dichtrings 8 ist.

Der maximale axiale Abstand von der axialen Mittelebene des Dichtring 8 zur axial äußersten Dichtlippe 33 ist f/2 mit f>e.Im dargestellten Ausführungsbeispiel bildet die Dichtlippe 33 mit ihrer nach axial außen vom Dichtring 8 weisenden Flanke die Verlängerung der Stirnfläche 40. In diesem Ausführungsbeispiel ist f auch das Mass für die maximale axiale Breite des Dichtrings 8.

Wie in den Figuren 3a und 3b dargestellt ist, ist die axiale Erstreckung c des zentralen Ringkörpers 30 des unmontierten Dichtrings 8 an dessen radial innerer Oberfläche kleiner als der axiale Abstand t₁, der den axialen Abstand zwischen den radial innerem Enden der beiden Reifenwülsten 6 und 7 des auf die Felge 2 montierten Reifens 1 darstellt. Der Abstand e, der den axialen Abstand zwischen den Schnittlinien der Stirnflächen 40 zu den radial inneren Mantelflächen der Schenkel 31 und 32 des unmontierten Dichtrings 8 darstellt, ist größer als der axiale Abstand t₂ zwischen den Wülsten in der den Schnittlinien der Stirnflächen 40 zu den radial inneren Mantelflächen der Schenkel 31 und 32 des Dichtrings 8 entsprechenden radialen Position im montierten Reifen 1.

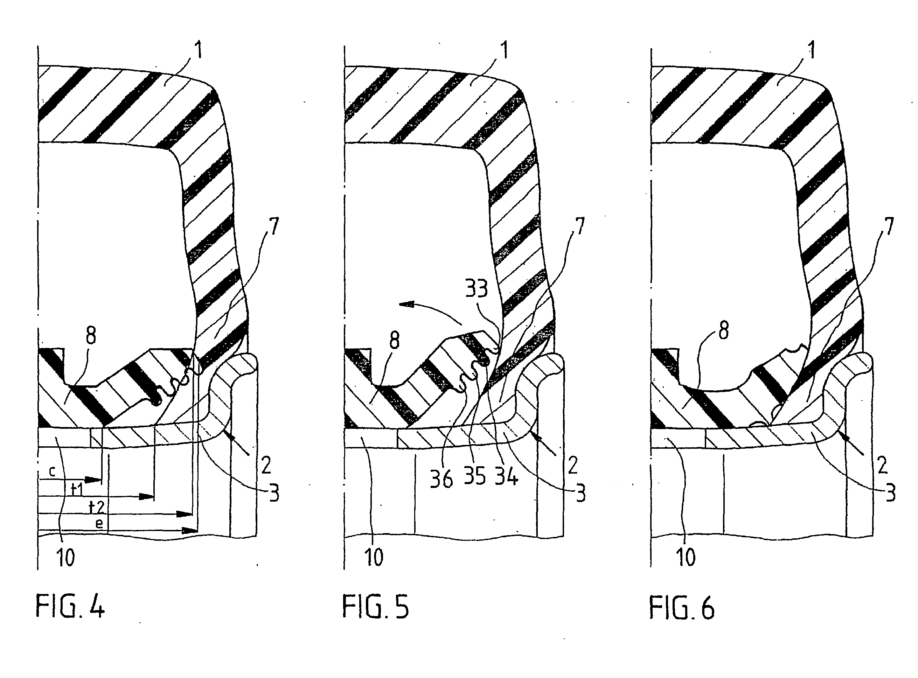

Dies ist auch in Fig. 4 zu erkennen, in der zur besseren Veranschaulichung die Figuren 3a und 3b überlagert dargestellt sind.

Die Differenz des axialen Abstands zwischen den axialen Außenseiten der beiden Schenkel 31 bzw. 32 minus dem axialen Wulstabstand der Reifenwülste 6 bzw.7 im montierten Betriebszustand des Reifens 1 auf der Felge 2 in der jeweils den axialen Außenseiten der beiden Schenkel 31 bzw. 32 entsprechenden radialen Position nimmt in radialer Richtung von der axial wie radial aüßersten Dichtlippe 33 zum axial wie radial nach innen benachbarten Dichtelement 34, von der Dichtlippe 34 zum axial wie radial nach innen benachbarten Dichtelement 35 und von der Dichtlippe 35 zum axial wie radial nach innen benachbarten Dichtelement 3 6 hin ab.

Zur Montage wird zunächst in herkömmlicher Weise der in den Figuren rechte Reifenwulst in Anlage an das Felgenhorn auf seiner Sitzfläche auf der radial äußeren Mantelfläche der Felge positioniert. Zur Montage des Dichtrings 8 wird dieser nun - wie in Fig. 5 mittels eines Pfeils dargestellt ist - mit seinem rechten Schenkeln 31 entgegen der elastischen Rückstellkraft des elastisch flexiblen ringförmigen Schenkels 31 über radial außen nach axial innen um ihre Anbindungsstelle am zentralen Ringkörper 30 geschwenkt, so dass der Dichtring 8 mit seinem zentralen Ringkörper 30 auf der hierzu ausgebildeten Sitzfläche auf der radialen Außenseite der Felge 2 zwischen den beiden Reifenwülsten 6 und 7 aufgeschoben und dort positioniert werden kann. Danach wird unter Verschwenken des linken Schenkels 32 entgegen der elastischen Rückstellkraft des elastisch flexiblen ringförmigen Schenkels 32 über radial außen nach axial innen um seine Anbindungsstelle am zentralen Ringkörper 30 der linke Reifenwulst in herkömmlicher Weise in seine Betriebsposition in axialer Anlage mit dem als linkes Felgenhorn ausgebildten Seitenrings 4 auf der Sitzfläche des Schrägschulterrings 5 der Felge 2 montiert und mittels Verschlussring 49 befestigt. Fig. 5 zeigt den montierten Zustand des Dichtrings 8 im Fahrzeugrad ohne Überdruck im Fahrzeugrad. Wie deutlich zu erkennen ist, liegt der Schenkel 31 sowie der Schenkel 32 jeweils lediglich aufgrund der elastischen Rückstellkraft des geschwenkten Schenkels 31 bzw. 32 mit seiner axial äußeren Dichtlippe 33 an dem jeweils zugehörigen Reifenwulst 6 bzw. 7 des montierten Reifens 1 an.

Mit Erhöhung des Innendrucks durch Befüllung des Reifens 1, die weiter unten genauer dargestellt wird, wird der Schenkel 31 bzw. 32 aufgrund des erhöhten Innendrucks über radial außen nach axial außen gegen den Reifenwulst 6 bzw. 7 gepresst, so dass zunächst die axial äußere Dichtlippe 33 unter Erhöhung der Dichtwirkung deformiert wird, bevor die nächstliegende axial innere Dichtlippe 34 in Berührkontakt zum zugehörigen Reifenwulst 6 bzw. 7 gerät. Bei weiterer Erhöhung des Innendrucks wird auch diese Dichtlippe 34 unter Erhöhung der Dichtwirkung deformiert bis die nächstliegende axial innere Dichtlippe 35 in Berührkontakt zum Reifenwulst 6 bzw. 7 gerät. Bei weiterer Erhöung des Innendrucks wird auch diese Dichtlippe 35 unter Erhöhung der Dichtwirkung deformiert, bis die nächstliegende axial innere Dichtlippe 36 in Berührkontakt zum zugeordneten Reifenwulst 6 bzw 7 gerät.

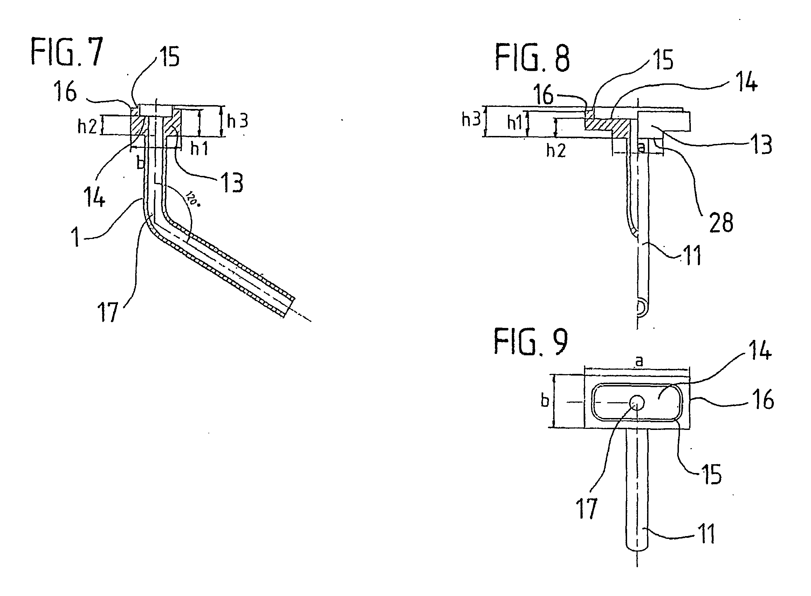

Bei weiterer Erhöhung des Innendrucks wird auch diese Dichtlippe 36 deformiert. Bei zusätzlicher Erhöhung des Innendrucks wird der Schenkel 31 bzw. 32 nach axial außen hin durchgebogen, so dass er sich gegen den zugehörigen Reifenwulst 6 bzw. 7 und die radiale Außenseite der Felge 2 dichtend anlegt Der Zustand mit dem Betriebsdruck von 10 bar Überdruck im Fahrzeugradinnern ist in Fig. 6 dargestellt.

In einer weiteren Ausführungsform ist an der radial äußeren zylindrischen Mantelfläche des Zentraler Ringkörpers 30 eine versteifende in Umfangsrichtung gerichtete und über den gesamten Umfang des Dichtrings erstreckte Rippe 37 ausgebildet, die sich in axialer Richtung über eine Breite w erstreckt. Dabei ist w so gewählt, dass w ≤ b. Beispielsweise ist w so gewählt, dass w = (b/2). Im dargestellten Ausführungsbeispiel von Fig. 2 ist die Rippe 37 mittig und symmetrisch zur axialen Mittenebene des Ringkörpers 8 ausgebildet.

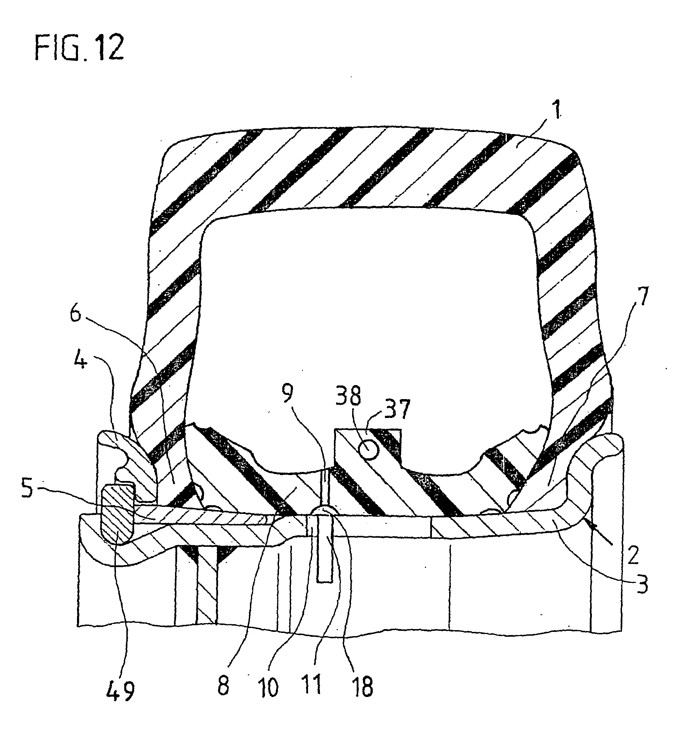

In einem weiteren nicht dargestellten Ausführungsbeispiel ist die Rippe 37 axial versetzt ausgebildet, so dass sie nicht mehr symmetrisch zur axialen Mittenebene des Dichtrings 8 angeordnet ist. In einem weiteren in Fig.12 dargestellten Ausführungsbeispiel ist in der Rippe 37 ein über den gesamten Umfang des Dichtrings erstreckter ringförmiger Hohlraum 38 ausgebildet.

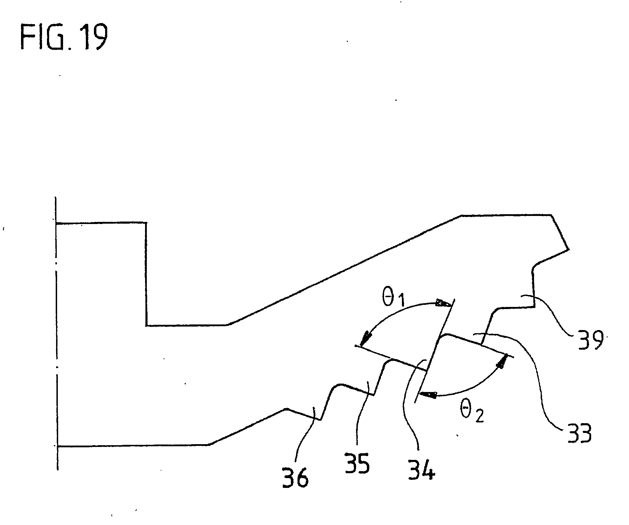

Die an den Schenkeln des Dichtrings 8 ausgebildeten Dichtlippen sind in einer Ausführung - wie in Figur 2 an Hand der vier Dichtlippen 33,34,35 und 36 dargestellt - im Querschnitt u-förmig ausgebildet. In einer anderen Ausführung sind die an den Schenkeln des Dichtrings ausgebildeten Dichtlippen - wie in Figur 19 an Hand der dort dargestellten vier Dichtlippen 33,34,35 und 36 zu erkennen ist - mit v-förmigem Querschnitt ausgebildet. In einer ebenfalls in Fig. 19 dargestellten Ausführung schließen die eine Dichtlippe begrenzenden Flanken der jeweiligen Dichtlippe jeweils einen Winkel θ₁ und die zueinander weisenden Flanken zweier benachbarter Dichtlippen jeweils einen Winkel θ₂ ein.

In einer Ausführung gilt θ₁ + θ₂=180°.

In einer Ausführung gilt: θ₁ = θ₂. In der in Figur 19 dargestellten Ausführung gilt: θ₁ = θ₂ = 90°.

Figur 19 zeigt eine weitere alternative Ausbildung eines Dichtrings 8 von Figur 2 mit fünf Dichtlippen 39,33,34,35 und 36.

In einer ebenfalls in Fig.19 dargestellten Ausführung bildet die am Schenkel am weitesten außen ausgebildete Dichtlippe 39 nicht mit ihrer nach axial außen vom Dichtring 8 weisenden Flanke die Verlängerung der Stirnfläche 40, sondern die Dichtlippe 39 ist beabstandet zur Stirnfläche 40 ausgebildet.

In einer weiteren in Figur 19 dargestellten Ausführung erstreckt sich die äußere Dichtlippe 39 senkrecht zur radial inneren Mantelfläche des jeweiligen Schenkels 31 bzw 32 ausgerichtet über eine senkrecht zur inneren Mantelfläche über eine kürze Erstreckungslänge p als die inneren Dichtlippen 33,34,35 und 36.

Der Dichtring 8 liegt im montierten in Fig. 1 dargestellten Betriebszustand nach radial innen auf der radial äußeren Oberfläche der Grundfelge 3 auf. Im Dichtring 8 ist eine in radialer Richtung erstreckt ausgebildete zylindrische Durchgangsöffnung 9 ausgebildet, die beispielsweise einen Durchmesser von 1 bis 10 mm aufweist. Die Durchgangsöffnung 9 ist beispielsweise mit einem Durchmesser von 1, von 3 oder von 6 mm ausgebildet.

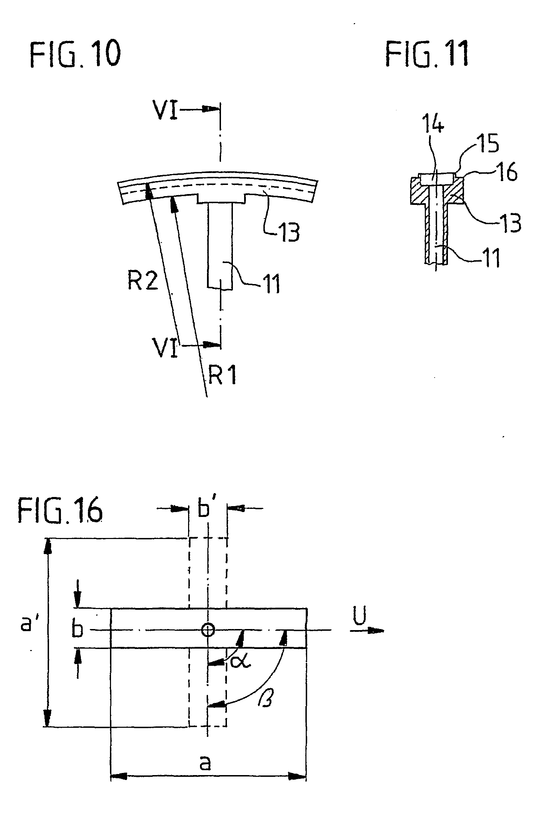

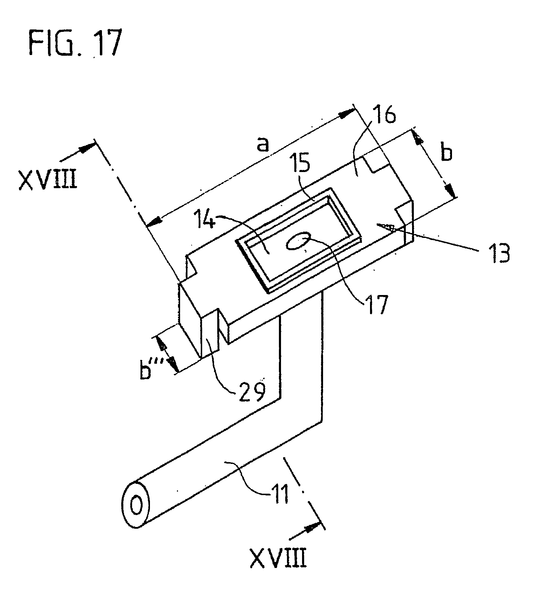

In der Grundfelge 3 ist, wie in Fig. 16 dargestellt ist, eine schlitzförmige Durchgangsöffnung 10, die sich in radialer Richtung durch die Felge hindurch erstreckt ausgebildet. Die schlitzförmige Durchgangsöffnung 10 ist mit ihrer längeren Haupterstreckung a' in axialer Richtung A des Fahrzeugrades und mit ihrer kürzeren Haupterstreckung b' in Umfangsrichtung U des Fahrzeugrades ausgebildet. Wie in den Figuren 1 und 11 dargestellt ist, erstreckt sich durch die schlitzförmige Durchgangsöffnung hindurch ein Ventilrohr 11, das außerhalb des Fahrzeugrades radial innerhalb der Felge in dem in Fig. 1 dargestellten Betriebszustand nach axial außen gekrümmt ist und an seinem Ende mit einem Ventil 12 bekannter Art bestückt ist. Am anderen Ende ist am Ventilrohr 11 eine senkrecht zur Achse des Ventilrohrs ausgerichtete Dichtplatte 13 beispielsweise durch Hartlöten, Schweißen oder Kleben befestigt.

Wie in den Figuren 1, 7, 8, 9 und 16 am Beispiel einer Dichtplatte mit Grundfläche mit einer längeren Haupterstreckung a und einer kürzeren Haupterstreckung b dargestellt ist, ist die Platte an ihrer vom Ventilrohr 11 wegweisenden und im Fahrzeugrad in radialer Richtung des Fahrzeugrades nach außen weisenden Seite mit einer ebenen Oberfläche ausgebildet, die den Plattengrund 14 bildet. Im Bereich des Plattengrundes 14 ist die Dicke der Platte in radialer Richtung gesehen h₂. Entlang ihres Randes ist die Platte in radialer Richtung mit einer erhöhten Kante 16 ausgebildet. Im Bereich der erhöhten Kante 16 ist die Dicke der Platte h₁. An der zum Plattengrund 14 weisenden Innenseite der Kante 16 ist eine in radialer Richtung erstreckte Dichtlippe 15 ausgebildet. Im Bereich der Dichtlippe 15 beträgt die Dicke der Platte 13 mit Dichtlippe 15 h₃. Für die Maße h₁, h₂ und h₃ gilt: h₃>h₁>h₂.

Die Haupterstreckungsrichtung mit Erstreckung a der Dichtplatte steht unter einem Winkel β zur Haupsterstreckung mit der Erstreckungslänge b. Die erste Haupterstreckungsrichtung mit der Erstreckung b' des Schlitzes steht unter einem Winkel β zur zweiten Haupterstreckung mit der Erstreckungslänge a' des Schlitzes. Dabei gilt für β: 10° ≤ β ≤ 90°. An dem in den Figuren dargestellten Ausführungsbeispielen, bei dem die Platte eine rechteckige Grundfläche aufweist, beträgt β = 90°.

Für die Erstreckungslängen der Haupterstreckungen a, b, a', b' von Dichtplatte 13 und schlitzförmiger Durchgangsöffnung 10 gilt: a > b, a' > b', a' > a > b' > b.

Die Durchgangsöffnung des Luftkanals 17 des Ventilrohrs 11 erstreckt sich bis in den Plattengrund 14 der Dichtplatte 13. Die Dichtlippe 15 erstreckt sich entlang der den Rand der Dichtplatte 13 bildenden Kante 16 umlaufend um den Boden 14 mit Luftkanal 17.

Bei dem in Fig. 1 dargestellten Fahrzeugrad im Betriebszustand mit einem Betriebsdruck im Innern der vom Reifen 1 und Dichtring 8 luftdicht eingeschlossenen Luftkammer von 10bar ist die Dichtplatte 13 -wie in Fig. 16 zu erkennen ist - mit ihrer längeren Erstreckung a unter einem Winkel α zur längeren Haupterstreckung a' des Schlitzes 10 ausgerichtet. Dabei beträgt α beispielsweise:
60° ≤α≤ 120°. In der in den Figuren dargestellten Ausführungsformen beträgt α = 90°.

Hierdurch liegt die Platte 13 mit ihrer Unterseite auf der Felgenoberfläche außerhalb der schlitzförmigen Durchgangsöffnung 10 auf und die Dichtlippe 15 steht längs ihrer Erstreckung in dichtendem Berührkontakt zur radialen Innenseite des Dichtrings 8. Die Dichtungsöffnung 9 des Dichtrings 8 mündet an der radial inneren Seite des Dichtrings 8 in dem von der Dichtlippe 15 umgebenen Bereich. Aufgrund des hohen Innendrucks des Fahrzeugreifens sind Dichtring 8, Dichtplatte 13 und Grundfelge 3 so stark radial gegeneinander gepresst, dass eine sichere dichtende Verbindung zwischen Dichtlippe 15 und Dichtring 8 bewirkt wird.

Zur Montage des Fahrzeugrades wird zunächst - wie oben dargeslegt - in herkömmlicher Weise der Luftreifen 1 und der Dichtring 8 auf die Grundfelge 3 positioniert und in seiner Betriebsposition fixiert. Danach wird das mit dem Ventil 12 bestückte Ventilrohr 11 mit seiner am Ende befestigten Platte 13, wobei die längere Erstreckung a parallel zur längeren Erstreckung a' der schlitzförmigen Durchgangsöffnung 10 ausgerichtet ist, durch die schlitzförmige Durchgangsöffnung 10 zwischen Grundfelge 3 und Dichtring 8 eingeführt, bis die Dichtlippe 15 in Berührkontakt zum Dichtring 8 steht Danach wird das Ventilrohr 11 mit Dichtplatte 13 um die Achse des Ventilrohrs 11 im Bereich der schlitzförmigen Durchgangsöffnung 10 um den Winkel β verdreht, so dass eine Verschränkung von Dichtplatte 13 und schlitzförmiger Durchgangsöffnung 10 und somit eine Positionssicherung des Ventilrohrs 11 im Fahrzeugrad gewährleistet ist. Danach wird das Fahrzeugrad über das Ventil 12 und das Ventilrohr 11, den durch die Dichtlippe 15 umgrenzten Raum zwischen Dichtring 8 und Ventilrohr 11 sowie durch die Durchgangsöffnung 9 mit Druckluft auf Betriebsdruck gebracht. Mit Ansteigen des Druckes wird der Dichtring 8 an seinen axialen Enden dichtend gegen die Wülste 6,7 Luftreifens 1 und an seiner nach radial innen weisenden Seite gegen die Dichtlippe 11 der Platte 13 gepresst. Somit ist das Fahrzeugrad mit schlauchlosem Luftreifen 1, Dichtring 8 und in axialer Richtung mehrteiliger Felge nach außen vollständig abgedichtet

Zur Demontage genügt es über das Ventil 12 des Ventilrohrs 11 den Luftreifen 1 soweit zu entlüften, dass sich das Ventilrohr 11 um seine Achse in der schlitzförmigen Durchgangsöffnung 10 um den Winkel α zurückdrehen lässt, und das Ventilrohr 11 mit Dichtplatte 13 aus der schlitzförmigen Durchgangsöffnung 10 zu entfernen.

Die Figuren 10 und 11 zeigen eine weitere Ausgestaltungsform der am Ventilrohr 11 befestigten Dichtplatte 13. Dabei ist die Dichtplatte 13 in ihrer Betriebsposition im Betriebszustand des Fahrzeugrades um die Achse des Fahrzeugrades der Kontur der Felge entsprechend mit einem Krümmungsradius R₁ um die Fahrzeugradachse gekrümmt, wobei R₁ dem Außenradius der Felge in dieser Position entspricht Entsprechend dieser Krümmung sind auch die Kanten 16 längs der längeren Erstreckung der Dichtplatte und diesen Erstreckungsbereichen der Kanten 16 zugeordneten Erstreckungsbereiche der Dichtlippe 15 gekrümmt ausgebildet, wobei der Krümmungsradius der Kanten R₂ dem Innenradius des Dichtrings 8 in dieser Position entspricht.

Fig. 12 zeigt ein Fahrzeugrad mit alternativer Ausbildung einer Dichtplatte 23 und des Dichtrings 8. Auf der radial inneren Seite des Dichtrings 8 eine Umfangsrille 18 ausgebildet, die sich in Umfangsrichtung des Dichtrings 8 über den gesamten Umfang des Dichtrings 8 erstreckt. Die Umfangsrille 18 hat im Ausführungsbeispiel eine u-förmige Querschnittskontur. Die Durchgangsöffnung 9 des Dichtrings 8 mündet mit ihrem radial inneren Ende im Rillengrund der Rille 18. Der Rillenkontur entsprechend ist die Dichtplatte 23 mit ihrer Kante 16 an ihren in die Haupterstreckungsrichtung mit der längeren Haupterstreckung a gerichteten Längsseiten mit gleicher Dicke H₁ und an ihren mit kürzerer Erstreckungslänge b ausgebildeten Stirnseite mit längs ihrer Stirnseitenerstreckung verändertem Dickenverlauf H₄ ausgebildet, wobei die im eingebauten Betriebszustand in radialer Richtung des Fahrzeugrads nach außen ausgebildete Kontur korrespondierend zur u-förmigen Kontur des Querschnitts der Rille 18 ausgebildet ist. Entsprechend dem Kantenverlauf der Kante 16 ist auch die endlos entlang der Kante 16 ausgebildete Dichtlippe dieser Kontur folgend ausgebildet:

Zur Montage wird das Ventilrohr 11 mit seiner Dichtplatte 23 voran mit Ausrichtung der längeren Haupterstreckung a parallel zur längeren Haupterstreckung a' der schlitzförmigen Durchgangsöffnung 10 durch die schlitzförmige Durchgangsöffnung 10 der Grundfelge 3 zwischen Grundfelge 3 und Dichtring 8 eingeschoben und dort um den Winkel α verdreht, so dass die Dichtplatte 23 mit ihrer längeren Längserstreckung a in Betriebsposition ausgerichtet ist und dabei in die Umfangsrille 18 formschlüssig eingreift. Durch Herstellung des Überdrucks im Fahrzeugrad über das Ventil 12, das Ventilrohr 11, den zwischen Dichtring 8 und Plattengrund 14 der Dichtplatte 13 von der Dichtlippe 15 umgebenen Raum und über die Durchgangsöffnung 9 des Dichtrings 8 wird der Dichtring 8 dichtend mit seinen axialen Rändern gegen die Reifenwülste 6 und 7 und nach radial innen in der Umfangsrille 18 gegen die Dichtlippe 15 der Dichtplatte 23 gepresst.

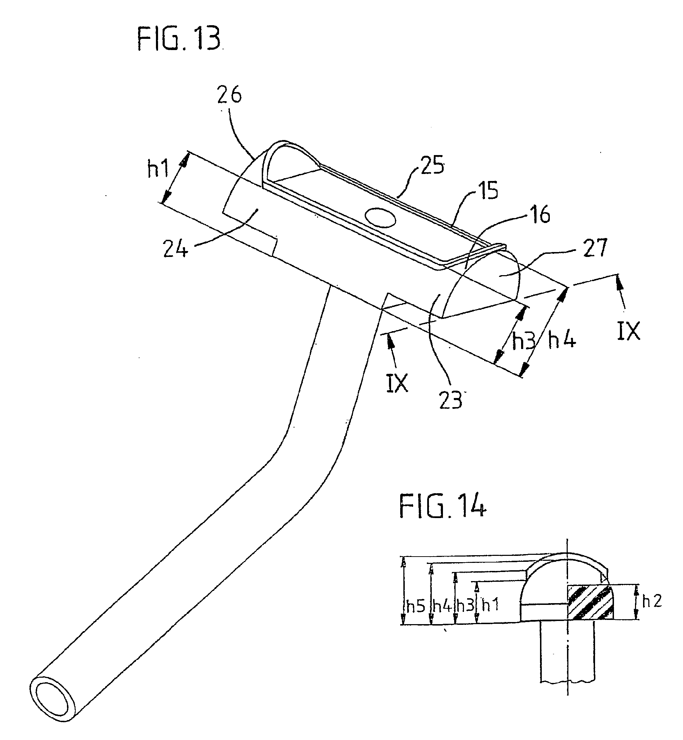

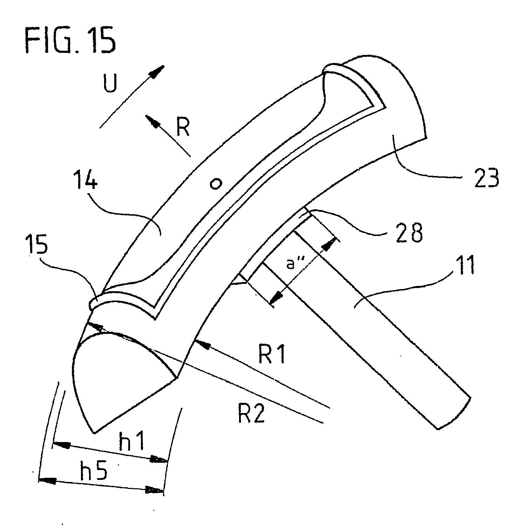

In Fig. 15 ist analog zur Darstellung der Figuren 10 und 11 eine alternative Ausführung der Dichtplatte 23 der Figuren 12 bis 14 dargestellt, bei der die Dichtplatte 23 ihrer Betriebsposition im Fahrzeugrad entsprechend um die Fahrzeugradachse gekrümmt ausgebildet ist mit einem Innenradius R₁, der dem Außenradius der Felge in der Betriebsposition der Dichtplatte 23 entspricht und mit einem Außenradius R₂, der dem Innenradius des Dichtrings 8 im Grund der Umfangsrille 18 entspricht.

In einer weiteren in den Figuren 8, 14 und 15 dargestellten Ausführung ist die Dichtplatte 13 bzw. 23 an ihrer radial inneren Seite zu einem Verschränkungsbereich 28 ausgebildet, in dessen radialer Erstreckung die Plattte in Erstreckungsrichtung der längeren Erstreckung a der Platte lediglich über ein Maß a" erstreckt ist, wobei a" kleiner ist als die kürzere Erstreckung a' der schlitzförmigen Durchgangsöffnung 10. Hierdurch wird erreicht, dass nach Einschieben der Platte 13 bzw. 23 durch die schlitzförmige Durchgangsöffnung 10 zwischen Felge und Dichtring nach Verdrehen des Ventilrohrs 11 mit Dichtplatte 13 um den Winkel α die Platte mit ihrem Verschränkungsbereich 28 nach radial innen formschlüssig in die schlitzförmige Durchgangsöffnung 10 eingreift.

Die Dichtplatte 13 bzw. 23 mit Dichtlippe 15 der genannten Ausführungsbeispiele ist einstückig aus Gummi, Messing oder dichtendem Kunststoffmaterial hergestellt In einer besonderen Ausführung ist die Dichtplatte 13 bzw. 23 mit dem Ventilrohr 11 einstückig ausgebildet.

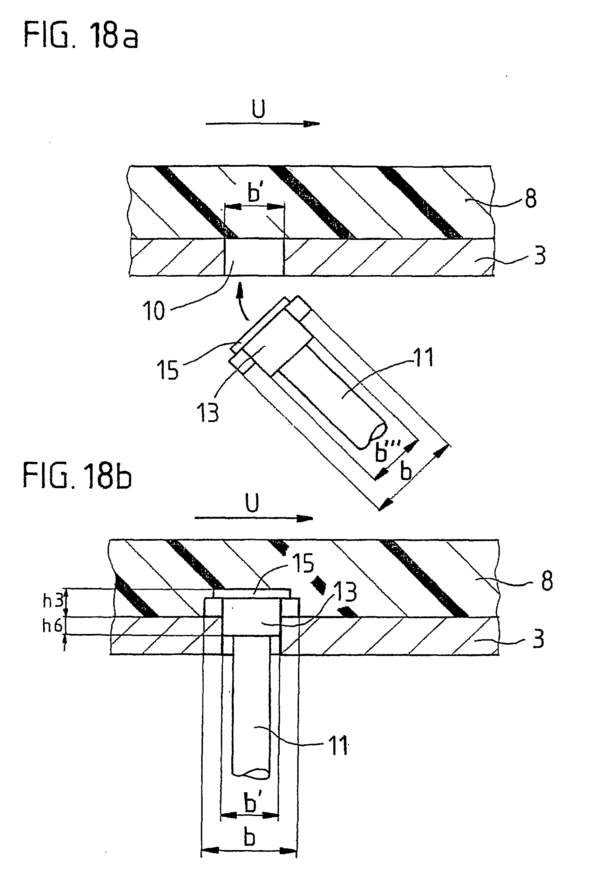

Die Figuren 17 und 18 zeigen eine alternative Ausführung der Montage und Befestigung eines Ventilrohrs 11 mit einer Dichtplatte 13 am Beispiel einer Dichtplatte 13 der Figuren 1, 7, 8 und 9. Die Dichtplatte 13 ist in diesem Ausführungsbeispiel ebenso wie die schlitzförmige Durchgangsöffnung 10 rechteckförmig ausgebildet, mit den Haupterstreckungen a und b der Dichtplatte 13 und den den Haupterstreckungen a' und b' der schlitzförmigen Durchgangsöffnung 10, wobei an beiden Enden der Längserstreckung der Dichtplatte 13 quer zu ihrer längeren Erstreckungsrichtung a an den von der Dichtlippe 15 weg weisenden Oberfläche jeweils mit einer Zunge 29 ausgebildet, die in Richtung quer zur Längserstreckung über eine Länge b"' und von der Unterseite der Dichtplatte 13 über Höhe h₆ erstreckt, wobei b"' < b'< b<a<a'.

Zur Montage wird - wie in Fig. 18a dargestellt ist - das Ventilrohr 11 mit der Dichtplatte 13 mit ihrer längeren Haupterstreckung a parallel zur längeren Haupterstreckung a' der schlitzfönnigen Durchgangsöffnung 10 ausgerichtet seitlich um die längere Haupterstreckung a gekippt, so dass die senkrechte Projektion der der Dichtplatte 13 auf die schlitzförmigen Durchgangsöffnung 10 auch in ihrer Erstreckung quer zur längeren Haupterstreckung a kleiner ist als die kleinere Haupterstreckung b' der schlitzförmigen Durchgangsöffnung 10. Danach wird die Dichtplatte 13 durch die schlitzförmige Durchgangsöffnung 10 zwischen Grundfelge 3 und Dichtring 8 eingeschoben und danach entgegen der ursprünglichen Kippreichtung wieder zurückgekippt, so dass die Dichtplatte 13 mit ihren beidseitig über die kürzere Quererstreckung hinausstehenden Randbereichen parallel zur längeren Haupterstreckung a' der schlitzförmigen Durchgangsöffnung 10 auf der Felge aufliegt und mit ihren Zungen 29 formschlüssig in die schlitzförmigen Durchgangsöffnung 10 eingreift. Hierzu ist b"' gegenüber b so dimensioniert, dass lediglich eine geringe Spielpassung zwischen montierter Dichtplatte 13 und schlitzförmiger Durchgangsöffnung 10 erfolgt. Dies ist in Fig. 18b dargestellt.

Hierdurch liegt die Platte 13 mit ihrer Unterseite auf der Felgenoberfläche außerhalb der schlitzförmigen Durchgangsöffnung 10 auf und die Dichtlippe 15 steht längs ihrer Erstreckung in dichtendem Berührkontakt zur radialen Innenseite des Dichtrings 8. Die Dichtungsöffnung 9 des Dichtrings 8 mündet an der radial inneren Seite des Dichtrings 8 in dem von der Dichtlippe 15 umgebenen Bereich. Aufgrund des hohen Innendrucks des Fahrzeugreifens sind Dichtring 8, Dichtplatte 13 und Grundfelge 3 so stark radial gegeneinander gepresst, dass eine sichere dichtende Verbindung zwischen Dichtlippe 15 und Dichtring 8 bewirkt wird.

In den Figuren 17 und 18 ist beispielhaft eine weietere Ausführung dargestellt, bei der die schlitzförmigen Durchgangsöffnung 10 mit ihrerer längeren Haupterstreckung a' in Umfangsrichtung U des Fahrzeugrades ausgerichtet ist.

### Bezugszeichenliste

- 1: Luftreifen
- 2: Mehrteilige Felge
- 3: Grundfelge
- 4: Hornring
- 5: Geteilter Schrägschulterring
- 6: Reifenwulst
- 7: Reifenwulst
- 8: Dichtring
- 9: Durchgangsöffnung
- 10: Schlitzförmige Durchgangsöffnung
- 11: Ventilrohr
- 12: Ventil
- 13: Dichtplatte
- 14: Plattengrund
- 15: Dichtlippe
- 16: Kante
- 17: Luftkanal
- 18: Umfangsrille
- 23: Dichtplatte
- 24: Längsseite
- 25: Längsseite
- 26: Stirnseite
- 27: Stirnseite
- 28: Verschränkungsbereich
- 29: Zunge
- 30: Zentraler Ringkörper
- 31: Ringförmiger Schenkel
- 32: Ringförmiger Schenkel
- 33: Dichtlippe
- 34: Dichtlippe
- 35: Dichtlippe
- 36: Dichtlippe
- 37: Versteifungsrippe
- 38: Hohlraum
- 39: Dichtlippe
- 40: Stirnfläche
- 49: Verschlussring

## Patentansprüche

1. Dichtring (8) für ein Fahrzeugrad mit einem schlauchlosen Luftreifen (1) mit zwei an dessen radial innerer Seite ausgebildeten Reifenwülsten (6,7), mittels der der schlauchlose Luftreifen (1) auf der radialen Außenseite einer mehrteiligen Felge (2) montiert ist, und mit einem den Luftreifen (1) nach radial innen zur Felge (2) hin abdichtenden auf der radialen Außenseite der Felge (2) angeordneten, in Umfangsrichtung über den Umfang der Felge (2) erstreckten und in axialer Richtung zwischen den beiden Reifenwülsten des Luftreifens (1) erstreckten Dichtring,
**dadurch gekennzeichnet,**
**dass** der Dichtring (8) mit einem zentralen Ringkörper (30) mit zylindrischer Innenfläche zum Sitz auf der Felgenaußenfläche und an beiden axialen Seiten des zentralen Ringkörpers (30) jeweils mit einem konzentrischen flexiblen ringförmigen Schenkel (31,32) ausgebildet ist, der sich in axialer Richtung vom zentralen Ringkörper (30) nach außen hin schräg nach radial außen erstreckt, dass an dem vom zentralen Ringkörper (30) wegweisenden Ende des Schenkels (31,32) an der nach radial innen weisenden Oberfläche des ringförmigen Schenkels (31,32) über den Umfang des ringförmigen Schenkels (31,32) erstreckt ausgebildete deformierbare Dichtelemente ausgebildet sind.

2. Dichtring gemäß den Merkmalen von Anspruch 1,
wobei an dem vom zentralen Ringkörper (30) wegweisenden Ende des ringförmigen Schenkels (31,32) radial außerhalb des zentralen Ringkörpers (30) an der nach radial innen weisenden Oberfläche des ringförmigen Schenkels (31,32) über den Umfang des ringförmigen Schenkels (31,32) erstreckt ausgebildete deformierbare Dichtelemente ausgebildet sind.

3. Dichtring gemäß den Merkmalen von Anspruch 1 oder 2,
wobei die deformierbaren Dichtelemente in Umfangsrichtung ausgerichtete - insbesondere über den geamten Umfang des Dichtrings (8) erstreckte - Dichtlippen (33,34,35,36) sind.

4. Dichtring gemäß den Merkmalen von Anspruch 1,2 oder 3,
wobei die Dichtelemente mehrere - insbesondere drei bis sechs - in radialer Richtung verteilte in Umfangsrichtung ausgerichtete - insbesondere über den gesamten Umfang des Dichtrings (8) erstreckte - Dichtlippen (33,34,35,36) sind.

5. Dichtring gemäß den Merkmalen von einem oder mehreren der vorangegangenen Ansprüche,
wobei sich die Dichtlippen (33,34,35,36) im wesentlichen senkrecht zur Oberfläche des Schenkels (31,32) vom Schenkel (31,32) weg erstrecken.

6. Dichtring gemäß den Merkmalen von einem oder mehreren der vorangegangenen Ansprüche,
wobei am zentralen Ringkörper (30) zwischen den ringförmigen Schenkeln (31,32) Mittel zur Versteifung des Ringkörpers ausgebildet sind.

7. Dichtring gemäß den Merkmalen von Anspruch 6,
wobei die Mittel zur Versteifung eine oder mehrere an der radialen Außenseite des Ringkörpers ausgebildete radiale Erhebungen sind.

8. Dichtring gemäß den Merkmalen von Anspruch 7,
wobei wenigstens in einer radialen Erhebung ein Hohlraum (38) ausgebildet ist.

9. Dichtring gemäß den Merkmalen von Anspruch 6,7 oder 8,
wobei an der radialen Außenseite des zentralen Ringkörpers (30) zwischen den ringförmigen Schenkeln (31,32) eine in Umfangsrichtung ausgerichtete - insbesondere über den gesamten Umfang des Ringkörpers (30) erstreckte - Versteifungsrippe (37) ausgebildet ist.

10. Dichtring gemäß den Merkmalen von einem oder mehreren der vorangegangenen Ansprüche,
wobei der axiale Abstand c zwischen den axialen Außenseiten der beiden Schenkel (31,32) in einer ersten radialen Position, die der radialen Position der radial inneren Enden der Schenkel (31,32) entspricht, kleiner als der axiale Wulstabstand t₁ der Reifenwülste (6,7) im montierten Betriebszustand auf der Felge (2) in dieser ersten radialen Position ist,
wobei der axiale Abstand e zwischen den axialen Außenseiten der beiden Schenkel (31,32) in einer zweiten radialen Position, die der radialen Position der radial äußeren Enden der Schenkel (31,32) entspricht, größer als der axiale Wulstabstand t₂ der Reifenwülste (6,7) im montierten Betriebszustand auf der Felge (2) in dieser zweiten radialen Position ist und
wobei der axiale Abstand zwischen den axialen Außenseiten der beiden Schenkel (31,32) im Bereich der Dichtelemente größer als der axiale Wulstabstand t₁ der Reifenwülste (6,7) im montierten Betriebszustand auf der Felge (2) in der ersten radialen Position ist.

11. Dichtring gemäß den Merkmalen von Anspruch 10,
wobei der axiale Abstand zwischen den axialen Außenseiten der beiden Schenkel (31,32) im Bereich zumindest der radial äußeren - insbesondere aller - an den Schenkeln (31,32) ausgebildeten Dichtelemente größer als der jeweilige axiale Wulstabstand der Reifenwülste (6,7) im montierten Betriebszustand auf der Felge (2) in dieser radialen Position ist

12. Dichtring gemäß den Merkmalen von Anspruch 9 oder 10,
wobei die Differenz des axialen Abstands zwischen den axialen Außenseiten der beiden Schenkel (31,32) minus dem axialen Wulstabstand der Reifenwülste (6,7) im montierten Betriebszustand auf der Felge (2) in der jeweils zugeordneten radialen Position in radialer Richtung von einem Dichtelement zum nächsten Dichtelement abnimmt.

## Claims

1. Sealing ring (8) for a vehicle wheel, with a tubeless tyre (1) with two tyre beads (6, 7) which are formed on the radially inner side thereof and by means of which the tubeless tyre (1) is fitted on the radial outside of a multi-part rim (2), and with a sealing ring which seals the tyre (1) radially inwards towards the rim (2), is arranged on the radial outside of the rim (2), extends in the circumferential direction over the circumference of the rim (2) and extends in the axial direction between the two tyre beads of the tyre (1), **characterized in that** the sealing ring (8) is designed with a central ring body (30) having a cylindrical inner surface for sitting on the outer surface of the rim and, on both axial sides of the central ring body (30), with a respective concentric, flexible, annular limb (31, 32) which extends obliquely radially outwards in the axial direction from the central ring body (30) towards the outside, and **in that** deformable sealing elements which are designed such that they extend over the circumference of the annular limb (31, 32) are formed on the radially inwardly pointing surface of the annular limb (31, 32) at that end of the limb (31, 32) which points away from the central ring body (30).

2. Sealing ring according to the features of Claim 1, wherein deformable sealing elements which are designed such that they extend over the circumference of the annular limb (31, 32) are formed radially outside the central ring body (30) on the radially inwardly pointing surface of the annular limb (31, 32) at that end of the annular limb (31, 32) which points away from the central ring body (30).

3. Sealing ring according to the features of Claim 1 or 2, wherein the deformable sealing elements are sealing lips (33, 34, 35, 36) which are oriented in the circumferential direction and, in particular, extend over the entire circumference of the sealing ring (8).

4. Sealing ring according to the features of Claims 1, 2 or 3, wherein the sealing elements are a plurality of sealing lips (33, 34, 35, 36), in particular three to six sealing lips, which are distributed in the radial direction, are oriented in the circumferential direction and, in particular, extend over the entire circumference of the sealing ring (8).

5. Sealing ring according to the features of one or more of the preceding claims, wherein the sealing lips (33, 34, 35, 36) extend away from the limb (31, 32) essentially perpendicularly with respect to the surface of the limb (31, 32).

6. Sealing ring according to the features of one or more of the preceding claims, wherein means for stiffening the ring body are formed on the central ring body (30) between the annular limbs (31, 32).

7. Sealing ring according to the features of Claim 6, wherein the stiffening means are one or more radial elevations formed on the radial outside of the ring body.

8. Sealing ring according to the features of Claim 7, wherein a cavity (38) is formed at least in one radial elevation.

9. Sealing ring according to the features of Claims 6, 7 or 8, wherein a stiffening rib (37) which is oriented in the circumferential direction and, in particular, extends over the entire circumference of the ring body (30) is formed on the radial outside of the central ring body (30) between the annular limbs (31, 32).

10. Sealing ring according to the features of one or more of the preceding claims,
wherein the axial distance c between the axial outsides of the two limbs (31, 32) in a first radial position, which corresponds to the radial position of the radially inner ends of the limbs (31, 32), is smaller than the axial bead distance t₁ of the tyre beads (6, 7) in the fitted operational state on the rim (2) in said first radial position,
wherein the axial distance e between the axial outsides of the two limbs (31, 32) in a second radial position, which corresponds to the radial position of the radially outer ends of the limbs (31, 32), is larger than the axial bead distance t₂ of the tyre beads (6, 7) in the fitted operational state on the rim (2) in this second radial position, and
wherein the axial distance between the axial outsides of the two limbs (31, 32) in the region of the sealing elements is larger than the axial bead distance t₁ of the tyre beads (6, 7) in the fitted operational state on the rim (2) in the first radial position.

11. Sealing ring according to the features of Claim 10, wherein the axial distance between the axial outsides of the two limbs (31, 32) in the region of at least the radially outer sealing elements - in particular all of the sealing elements - formed on the limbs (31, 32) is larger than the respective axial bead distance of the tyre bead (6, 7) in the fitted operational state on the rim (2) in this radial position.

12. Sealing ring according to the features of Claim 9 or 10, wherein the difference of the axial distance between the axial outsides of the two limbs (31, 32) minus the axial bead distance of the tyre beads (6, 7) in the fitted operational state on the rim (2) in the respectively assigned, radial position decreases in the radial direction from one sealing element to the next sealing element.

## Revendications

1. Anneau d'étanchéité (8) pour roue de véhicule qui présente un bandage pneumatique (1) sans chambre à air et deux bourrelets de bandage (6, 7) formés sur ses côtés radialement intérieurs et au moyen desquels le bandage pneumatique (1) sans chambre à air est monté sur les côtés radialement extérieurs d'une jante (2) en plusieurs pièces, et un anneau d'étanchéité disposé sur le côté radialement extérieur de la jante (2), qui assure l'étanchéité du bandage pneumatique (1) par rapport à la jante (2) du côté radialement intérieur et qui s'étend dans le sens de la périphérie sur toute la périphérie de la jante (2) et dans la direction axiale entre les deux bourrelets du bandage pneumatique (1),
**caractérisé en ce que**
l'anneau d'étanchéité (8) est configuré avec un corps annulaire central (30) à surface intérieure cylindrique destiné à être posé sur la surface extérieure de la jante et avec une aile annulaire (31, 32) concentrique et flexible sur les deux côtés axiaux du corps annulaire central (30), laquelle aile s'étend dans la direction axiale depuis le corps annulaire central (30), vers l'extérieur et obliquement dans le sens radial, et **en ce qu'**à l'extrémité de l'aile (31, 32) non tournée vers le corps annulaire central (30), des éléments d'étanchéité déformables s'étendent à la périphérie de l'aile annulaire (31, 32) sur la surface de l'aile annulaire (31, 32) tournée radialement vers l'intérieur.

2. Anneau d'étanchéité selon les caractéristiques de la revendication 1, dans lequel des éléments d'étanchéité déformables qui sont formés sur l'extrémité de l'aile annulaire (31, 32) non tournée vers le corps annulaire central (30) sont disposés radialement à l'extérieur du corps annulaire central (30) sur la surface de l'aile annulaire (31, 32) tournée radialement vers l'intérieur et sur toute la périphérie de l'aile annulaire (31, 32).

3. Anneau d'étanchéité selon les caractéristiques des revendications 1 ou 2, dans lequel les éléments d'étanchéité déformables sont des lèvres d'étanchéité (33, 34, 35, 36) qui sont orientées dans le sens de la périphérie et qui s'étendent en particulier sur toute la périphérie de l'anneau d'étanchéité (8).

4. Anneau d'étanchéité selon les caractéristiques des revendications 1, 2 ou 3, dans lequel les éléments d'étanchéité sont plusieurs lèvres d'étanchéité (33, 34, 35, 36), en particulier trois à six lèvres d'étanchéité orientées dans le sens de la périphérie, qui sont réparties dans la direction radiale et qui s'étendent en particulier sur toute la périphérie de l'anneau d'étanchéité (8).

5. Anneau d'étanchéité selon les caractéristiques d'une ou plusieurs des revendications précédentes, dans lequel les lèvres d'étanchéité (33, 34, 35, 36) s'étendent essentiellement à la perpendiculaire de la surface de l'aile (31, 32) en s'éloignant de l'aile (31, 32).

6. Anneau d'étanchéité selon les caractéristiques d'une ou plusieurs des revendications précédentes, dans lequel des moyens de rigidification du corps annulaire sont formés sur le corps annulaire central (30) entre les ailes annulaires (31, 32).

7. Anneau d'étanchéité selon les caractéristiques selon les caractéristiques de la revendication 6, dans lequel les moyens de rigidification sont un ou plusieurs reliefs radiaux formés sur le côté radial extérieur du corps annulaire.

8. Anneau d'étanchéité selon les caractéristiques de la revendication 7, dans lequel un espace creux (38) est formé dans au moins un relief radial.

9. Anneau d'étanchéité selon les caractéristiques des revendications 6, 7 ou 8, dans lequel une nervure de renfort (37) orientée dans le sens périphérique s'étend en particulier sur toute la périphérie du corps annulaire (30) et est formée sur le côté radialement extérieur du corps annulaire central (30) entre les ailes annulaires (31, 32).

10. Anneau d'étanchéité selon les caractéristiques d'une ou plusieurs des revendications précédentes, dans lequel, dans une première position radiale qui correspond à la position radiale des extrémités radialement intérieures des ailes (31, 32), la distance axiale c entre le côté axial extérieur des deux ailes (31, 32) est inférieure à la distance axiale t₁ entre les bourrelets (6, 7) du bandage montés sur la jante (2) dans cette première position radiale,
tandis que dans une deuxième position radiale qui correspond à la position radiale des extrémités radialement extérieures des ailes (31, 32), la distance axiale e entre le côté axial extérieur des deux ailes (31, 32) est supérieure à la distance t₂ entre les bourrelets (6, 7) du bandage monté sur la jante (2) dans cette deuxième position radiale et
dans la zone des éléments d'étanchéité, la distance axiale entre le côté extérieur axial des deux zones (31, 32) est supérieure à la distance axiale t₁ entre les bourrelets (6, 7) du bandage montés sur la jante (2), dans la première position radiale.

11. Anneau d'étanchéité selon les caractéristiques de la revendication 10, dans lequel, au moins dans la zone des éléments d'étanchéité radialement extérieurs et en particulier de tous ces éléments d'étanchéité formés sur les ailes (31, 32), la distance axiale entre le côté axial extérieur des deux ailes (31, 32) est supérieure à l'écart axial correspondant entre les bourrelets (6, 7) du bandage monté sur la jante (2) dans cette position radiale.

12. Anneau d'étanchéité selon les caractéristiques des revendications 9 ou 10, dans lequel la différence entre la distance axiale entre le côté axial extérieur des deux ailes (31, 32) et la distance axiale entre les bourrelets (6, 7) du bandage monté sur la jante (2) dans chaque position radiale associée diminue dans la direction radiale d'un élément d'étanchéité au suivant.
